# EUROPÄISCHE PATENTSCHRIFT

(11) **EP 2 555 357 B1**
(45) Veröffentlichungstag und Bekanntmachung des Hinweises auf die Patenterteilung: **11.10.2017**
(21) Anmeldenummer: 12178988.7
(22) Anmeldetag: 02.08.2012
(51) Int. Cl.: H02B 1/28

(54) **Schaltschrank mit einer abgedichteten Tür**
Electrical cabinet with sealed door
Armoire de distribution avec porte étanche

(30) Priorität: 03.08.2011 DE 102011080376
(43) Veröffentlichungstag der Anmeldung: 06.02.2013
(73) Patentinhaber: Schneider Electric Sachsenwerk GmbH, 93055 Regensburg (DE)
(72) Erfinder: El Ouadhane, Harethe, 93053 Regensburg (DE); Stieg, Heinz, 93183 Kallmünz (DE)
(74) Vertreter: DREISS Patentanwälte PartG mbB

(56) Entgegenhaltungen:
- AT-A4- 507 801
- DE-C- 626 189
- FR-A- 1 120 592
- US-A1- 2009 173 118

## Beschreibung

### Stand der Technik

Die Erfindung betrifft einen Schaltschrank, insbesondere für eine Mittelspannungs-Schaltanlage, mit mindestens einer Tür mit einem Türblatt und einem Rahmen nach dem Oberbegriff des Anspruchs 1.

Aufgrund des Funktionsprinzips von Türen, insbesondere Drehtüren und/oder Hebetüren, speziell steckbaren Hebetüren, verbleibt auch in der Schließlage der Tür, bei der ein in bekannter Weise drehbar bzw. verschiebbar gegenüber dem Rahmen gelagertes Türblatt so ausgerichtet ist, dass eine durch das Türblatt definierte virtuelle Ebene im wesentlichen übereinstimmt mit einer durch den Rahmen definierten virtuellen Ebene, ein Spalt nichtverschwindender Breite, so dass in der Schließlage keine vollständige Dichtwirkung der Tür erzielt wird. Dadurch können bei Einsatz der Tür beispielsweise in einem Schaltschrank oder dergleichen Fluidströmungen aus dem Inneren des Schaltschranks, wie sie sich z.B. beim Auftreten eines Störlichtbogens in dem Schaltschrank ergeben, in einen den Schaltschrank umgebenden Außenraum ausbilden. Ungünstig wirkt sich hierbei ferner aus, dass der Spalt sich durch den im Lichtbogenfall entstehenden Überdruck und/oder eine durch Erhitzung bedingte Minderung der Steifigkeit der verwendeten Materialien weiter vergrößern kann.

Um die Ausbreitung von Fluidströmungen aus dem Inneren des Schaltschranks in den Außenraum zu verhindern, ist es bereits bekannt, sog. Labyrinthdichtungen an der Tür vorzusehen. Herkömmliche Labyrinthdichtungen sind jedoch konstruktiv sehr aufwändig und bedingen daher erhöhte Fertigungskosten; ferner wirken sie nur statisch. Zudem ist insbesondere bei Heißgas bzw. Plasma aufweisenden Fluidströmungen nur eine sehr geringe Standzeit der bekannten Labyrinthdichtungen zu erwarten.

Aus der DE 44 37 164 A1 ist ein Schaltschrank insbesondere für eine Mittelspannungsschaltanlage bekannt. Der Schaltschrank ist mit einer Hebetür versehen, die ein mittels eines Türscharniers an einem Türrahmen angelenktes Türblatt aufweist. Das Türblatt kann um die vertikale Achse des Türscharniers von einer geschlossenen in eine geöffnete Stellung und umgekehrt geschwenkt werden. In der geschlossenen Stellung kann das Türblatt in Richtung der Achse des Türscharniers von einer entriegelten in eine verriegelte Stellung und umgekehrt vertikal verschoben werden.

Die US 2009/173118 A1 offenbart eine Tür für einen Schaltschrank. Die Tür umfasst eine Türinnenfläche und eine Türscharnierseite. Eine Dichtung umfasst ein Dichtungselement an der Türscharnierseite angrenzend an die Innenfläche der Tür. Das Dichtungselement umfasst einen Flansch, welcher einen Teilbereich einer inneren Rahmenoberfläche überdeckt.

Zum Zwecke der Verriegelung sind das Türblatt und der Türrahmen an ihren jeweiligen vertikalen Rändern mit Verriegelungselementen versehen. In der DE 44 37 164 A1 handelt es sich dabei um einander zugeordnete, mäanderförmige Stege. In der entriegelten Stellung können die mäanderförmigen Stege des Türblatts an den mäanderförmigen Stegen des Türrahmens vorbeigeführt werden. Das Türblatt kann somit geöffnet bzw. geschlossen werden. In der verriegelten Stellung ist dies jedoch nicht möglich. Befinden sich die mäanderförmigen Stege des Türblatts somit in der verriegelten Stellung "hinter" den mäanderförmigen Stegen des Türrahmens, so kann das Türblatt nicht mehr geöffnet werden. In dieser Schließlage ist somit das Türblatt an dem Türrahmen arretiert.

Im ungestörten Betrieb des Schaltschranks ist zwischen dem Türblatt und dem Türrahmen ein Spalt vorhanden, wie dies vorstehend allgemein erläutert ist. Die Dichtwirkung dieses Spalts ist dabei für den ungestörten Betrieb ausgelegt und für diesen Betrieb auch ausreichend. Bei einer Fehlfunktion innerhalb des Schaltschranks, beispielsweise beim Auftreten eines Störlichtbogens, entsteht in sehr kurzer Zeit ein sehr hoher Druck im Innenraum des Schaltschranks. Dies führt dazu, dass eine Kraft von innen auf das geschlossene und verriegelte Türblatt einwirkt. Diese Kraft kann eine Ausbauchung des Türblatts nach außen zur Folge haben. Die Ausbauchung kann dazu führen, dass der Spalt zwischen dem Türblatt und dem Türrahmen sich vergrößert, so dass heiße Gas und gegebenenfalls vorhandene glühende Partikel aus dem Innenraum des Schaltschranks nach außen entweichen können. Dies kann eine Gefahr für eine sich im Bereich des Schaltschranks befindliche Person darstellen.

### Offenbarung der Erfindung

Demgemäß ist es Aufgabe der vorliegenden Erfindung, eine Tür der eingangs genannten Art dahingehend zu verbessern, dass eine gesteigerte Dichtwirkung, Dynamik und Standzeit der Dichtung mit gegenüber herkömmlichen Systemen geringerem konstruktivem Aufwand erreicht wird.

Diese Aufgabe wird durch einen Schaltschrank nach dem Anspruch 1 gelöst.

Eine bei einer Druckerhöhung, beispielsweise bei einem in dem Schaltschrank auftretenden Störlichtbogen, auftretende Fluidströmung kann somit nicht unmittelbar und direkt die Verriegelungselemente erreichen, sondern muss zuerst die Abdichtelemente passieren. Dies bringt den Vorteil mit sich, dass die Fluidströmung bereits abgeschwächt ist, wenn sie die Verriegelungselemente erreicht. Insbesondere erfolgt durch die Abdichtelemente eine Verminderung der Strömungsgeschwindigkeit und damit auch eine Zeitverzögerung, bis die Fluidströmung die Verriegelungselemente erreicht.

Die erfindungsgemäßen Abdichtelemente stellen somit einen Schutz für die Verriegelungselemente im Hinblick auf eine bei einem Störlichtbogen entstehende Fluidströmung dar. Eine Schädigung der Verriegelungselemente und eine damit verbundene Gefahr, dass heiße Gas und gegebenenfalls vorhandene glühende Partikel aus dem Innenraum des Schaltschranks nach außen entweichen, wird auf diese Weise vermindert oder gar vollständig verhindert. Die Gefahr für eine sich im Bereich des Schaltschranks befindliche Person wird somit ebenfalls geringer.

Die erfindungsgemäßen Abdichtelemente, die zusätzlich zu der herkömmlichen Ausbildung der Tür, insbesondere zusätzlich zu den an sich bekannten Verriegelungselementen vorgesehen sind, bilden vorteilhaft einen verlängerten Strömungsweg für durch die Tür bzw. den Spalt hindurchtretende Fluidströmungen, so dass gegenüber herkömmlichen Türen eine verbesserte Dichtwirkung gegeben ist. Gleichzeitig weist die erfindungsgemäße Konstruktion eine sehr geringe konstruktive Komplexität auf, so dass sich die Fertigung vereinfacht bzw. vorteilhaft auch eine einfache Nachrüstung an Bestandstüren möglich ist.

Besonders vorteilhaft kann der Strömungsweg, der durch die erfindungsgemäßen Abdichtelemente definiert wird, ferner so ausgelegt werden, dass sich seine Geometrie, insbesondere Spaltbreite, unter Druckbeaufschlagung verändert, insbesondere verringert. Dadurch wird vorteilhaft eine gesteigerte Dichtwirkung mit dynamischem Ansprechverhalten bereitgestellt.

Wenn also im Fehlerfall, beispielsweise bei einem Störlichtbogen, der Druck im Innenraum eines Schaltschranks ansteigt, so hat dies zur Folge, dass sich die Spaltbreite des Strömungskanals verringert. Damit wird erreicht, dass weniger heiße Gase und gegebenenfalls vorhandene glühende Partikel aus dem Innenraum des Schaltschranks nach außen entweichen. Die Gefährdung für eine sich im Bereich des Schaltschranks befindliche Person wird damit geringer.

Bei einer weiteren vorteilhaften Ausführungsform ist vorgesehen, dass das erste und/oder zweite Abdichtelement im wesentlichen als Rechteck- oder Winkelprofil ausgebildet sind, was die Fertigungskosten verringert und eine einfache Nachrüstung an vielen unterschiedlichen Typen von Bestandstüren ermöglicht.

Bei einer weiteren vorteilhaften Ausführungsform ist vorgesehen, dass das erste Abdichtelement und/oder wenigstens ein Schenkel des zweiten Abdichtelements mindestens abschnittsweise etwa einen rechten Winkel mit der von dem Türblatt definierten virtuellen Ebene einschließt, so dass besonders häufig vorkommende Winkelprofile mit "L"-förmigem Querschnitt verwendbar sind, um die erfindungsgemäße Dichtungseinrichtung bzw. Tür aufzubauen.

Bei einer weiteren vorteilhaften Ausführungsform ist vorgesehen, dass das erste Abdichtelement und/oder wenigstens ein Schenkel des zweiten Abdichtelements mindestens abschnittsweise einen Winkel kleiner 90 ° mit der von dem Türblatt definierten virtuellen Ebene des Rahmens bzw. des Türblatts in Schließlage einschließt, so dass konstruktiven Besonderheiten der Tür Rechnung getragen und der Strömungskanal ggf. noch weiter verlängert werden kann.

Generell können die erfindungsgemäßen Abdichtelemente entlang ihrer Längsachse abschnittsweise oder auch kontinuierlich unterschiedliche Formen aufweisen, so dass entlang einer abzudichtenden Kante des Türblatts unterschiedliche Geometrien der Abdichtelemente erzielbar sind.

Bei einer weiteren vorteilhaften Ausführungsform ist vorgesehen, dass die Abdichtelemente so relativ zueinander angeordnet sind, dass sie in der Schließlage der Tür zumindest teilweise einander überlappen, beispielsweise mit jeweils flächig ausgebildeten Bereichen wie z.B. den Schenkeln im Falle eines L-/Winkel-Profils. Generell kann durch einen gesteigerten Überlappungsgrad eine gesteigerte Dichtwirkung erzielt werden, was beispielsweise die Anwendbarkeit bei Schaltanlagen mit großen Kurzschluss- bzw. Lichtbogenströmen verbessert.

Bei einer weiteren vorteilhaften Ausführungsform ist vorgesehen, dass mindestens eines der Abdichtelemente mittels Schweißen und/oder Nieten, insbesondere Blindnieten, mit dem Türblatt oder dem Rahmen verbunden ist, wodurch auch eine einfache Nachrüstung der Abdichtelemente ermöglicht ist.

Bei besonders bevorzugten Ausführungsformen ist die Tür als Hebetür oder als Drehtür ausgebildet.

Der erfindungsgemäße Schaltschrank bietet vorteilhaft eine gesteigerte Dichtwirkung, deren dynamisches Verhalten insbesondere auch im Falle von Störlichtbögen in dem Schaltschrank von Bedeutung ist. Insbesondere ergibt sich bei der Ausbildung der Tür mit den erfindungsgemäßen Abdichtelementen neben einer vereinfachten Konstruktion gegenüber herkömmlichen Labyrinthdichtungen auch eine längere Abdichtzeit bei dem Auftreten von Störlichtbögen. Durch solche Störlichtbögen erzeugte Heißgase bzw. Plasma werden von dem erfindungsgemäßen Schaltschrank also vorteilhaft zu einem geringeren Grad an die Umgebung des Schaltschranks abgegeben. Aufgrund der geringen konstruktiven Komplexität weist die erfindungsgemäße Tür vorteilhaft auch eine größere Zuverlässigkeit und Betriebssicherheit auf.

Als eine weitere Lösung der Aufgabe der vorliegenden Erfindung ist ein Verfahren zur Herstellung einer Tür für einen Schaltschrank insbesondere einer Mittelspannungs-Schaltanlage, angegeben, wobei die Tür mit einem Türblatt und einem Rahmen bereitgestellt wird, und wobei das Türblatt in einer Schließlage mit Hilfe von Verriegelungselementen an dem Rahmen arretiert ist. Erfindungsgemäß werden an dem Türblatt und an dem Rahmen mindestens zwei Abdichtelemente vorgesehen, und es werden die beiden Abdichtelemente auf der Innenseite der Verriegelungselemente angeordnet.

Besonders vorteilhaft kann mindestens eines der Abdichtelemente gemäß einer Ausführungsform mittels Schweißen und/oder Nieten, insbesondere Blindnieten, mit dem Türblatt oder dem Rahmen verbunden werden.

Nachfolgend werden beispielhafte Ausführungsformen der Erfindung unter Bezugnahme auf die Zeichnung erläutert. In der Zeichnung zeigt:
Figur 1 schematisch eine Tür, nicht Teil der Erfindung, in einem teilweisen Querschnitt,
Figur 2 schematisch eine Tür, nicht Teil der Erfindung, in einem teilweisen Querschnitt,
Figur 3 schematisch eine Tür gemäß einer ersten Ausführungsform der Erfindung in einem teilweisen Querschnitt,
Figur 4 schematisch eine Tür gemäß einer zweiten Ausführungsform der Erfindung in einem teilweisen Querschnitt,
Figur 5 und Figur 6 jeweils eine Detailansicht einer Tür gemäß einer weiteren Ausführungsform der Erfindung in einem teilweisen Querschnitt,

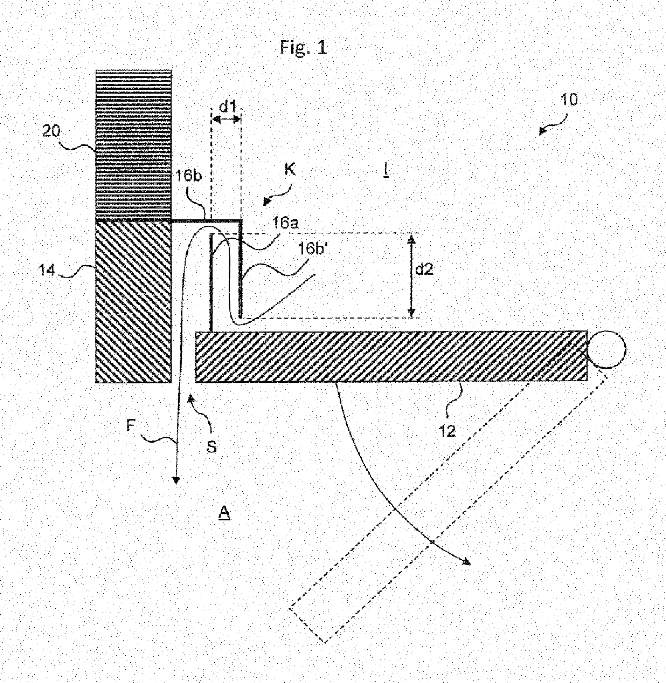

Figur 1 zeigt schematisch eine Tür 10 in einem teilweisen Querschnitt.

Die Tür 10 ist vorliegend als Drehtür ausgebildet, wobei ein Türblatt 12 in an sich bekannter Weise über mindestens ein Scharnier (Fig. 1 rechts) drehbar gegenüber dem Rahmen 14 gelagert ist. Das in Figur 1 nicht näher bezeichnete Scharnier kann beispielsweise am Rahmen 14 oder an einer Wand eines die Tür 10 aufweisenden Zielsystems angeordnet sein. Eine öffnende Bewegungsrichtung des Türblatts 12 ist in Figur 1 durch den geschwungenen Pfeil angedeutet.

Als Zielsystem für die Tür 10 kommt beispielsweise ein Gebäude oder auch ein Schaltschrank für eine Mittelspannungsanlage oder dergleichen in Betracht. Für die weitere Beschreibung wird davon ausgegangen, dass die Tür 10 Bestandteil eines Schaltschranks für eine Mittelspannungsanlage ist, dessen in Fig. 1 linke Seitenwand mit dem Bezugszeichen 20 bezeichnet ist. Weitere Bereiche des Schaltschranks und des Rahmens 14, an dem z.B. das Scharnier befestigt ist, sind der Übersichtlichkeit halber nicht abgebildet.

Figur 1 zeigt die Schließlage des Türblatts 12, bei der ein dem Scharnier abgewandter Endbereich des Türblatts 12 maximal nahe an dem Rahmen 14 angeordnet ist. Ein geöffneter Zustand ist durch ein gestricheltes Rechteck angedeutet. Der Rahmen 14 wiederum ist verbunden mit der Seitenwand 20. Ein Spalt S zwischen dem Türblatt 12 und dem Rahmen 14 ermöglicht einen Fluidaustausch zwischen einem Innenraum I, beispielsweise dem Inneren des die Tür 10 aufweisenden Schaltschranks (nicht gezeigt) und einem Außenraum A.

Um eine Abdichtung des Außenraums A gegen den Innenraum I zu verbessern, weist die Tür 10 die nachstehend beschriebenen Abdichtelemente 16a, 16b auf.

Wie aus Fig. 1 ersichtlich ist, ist ein erstes, im wesentlichen flächig ausgebildetes, Abdichtelement 16a an dem Türblatt 12 so befestigt, dass es sich zumindest teilweise aus einer durch das Türblatt 12 definierten virtuellen Ebene heraus erstreckt, vorliegend in Richtung des Innenraums I des Schaltschranks.

Ferner ist an dem Rahmen 14 mindestens ein zweites, ebenfalls im wesentlichen flächig ausgebildetes, Abdichtelement 16b vorgesehen, das so an dem Rahmen 14 angeordnet ist, dass es dann, wenn das Türblatt 12 sich in der in Fig. 1 gezeigten Schließlage gegenüber dem Rahmen 14 befindet, mit dem ersten Abdichtelement 16a zusammenwirkt, um einen Strömungskanal K für eine Fluidströmung F im Bereich des Spalts S zu bilden.

D.h., anstelle einfach durch den Spalt S aus dem Innenraum I in den Außenraum A entweichen zu können, muss ein in dem Innenraum I vorliegendes Fluid bzw. eine Fluidströmung F aufgrund der Anordnung und Ausbildung der Abdichtelemente 16a, 16b nunmehr den - gegenüber dem Spalt S weitaus längeren und abgewinkelten - Strömungskanal K durchlaufen, bevor es aus dem Innenraum I in den Außenraum A austreten kann. Die Dichtwirkung der Tür 10 ist somit aufgrund der Abdichtelemente 16a, 16b gegenüber einer herkömmlichen Tür (nicht gezeigt), die nur einen zu dem Spalt S vergleichbaren Spalt aufweist, erheblich verbessert.

Das Maß der Dichtwirkung ergibt sich u.a. durch den Grad der Überlappung der einander gegenüberliegenden Schenkel der Abdichtelemente 16a, 16b, die den Strömungskanal K definieren, vgl. die Überlappungsbreite d2. Falls in dem Innenraum I z.B. ein Störlichtbogen auftritt, der in an sich bekannter Weise die Entstehung von Heißgas und/oder Plasma bewirkt, kann die Tür 10 eine längere Abdichtzeit des Innenraums I gegenüber dem Außenraum A bewirken, wobei die Abdichtzeit neben dem Grad der Überlappung d2 der einander gegenüberliegenden Schenkel der Abdichtelemente 16a, 16b u.a. auch von der Öffnungsbreite d1 des Strömungskanals K abhängt.

Bei einer weiteren vorteilhaften Ausführungsform ist vorgesehen, dass das erste und/oder zweite Abdichtelement 16a, 16b im wesentlichen als Rechteck- oder Winkelprofil ausgebildet sind, was die Fertigungskosten verringert und eine einfache Nachrüstung an vielen unterschiedlichen Typen von Bestandstüren ermöglicht.

Bei einer weiteren vorteilhaften Ausführungsform ist vorgesehen, dass das erste Abdichtelement 16a und/oder wenigstens ein Schenkel 16b' des zweiten Abdichtelements 16b mindestens abschnittsweise etwa einen rechten Winkel mit der virtuellen Ebene (des Türblatts 12 bzw. des Rahmens 14) einschließt, so dass besonders häufig vorkommende Winkelprofile mit "L"-förmigem Querschnitt verwendbar sind, um die Dichtungseinrichtung bzw. Tür 10 aufzubauen.

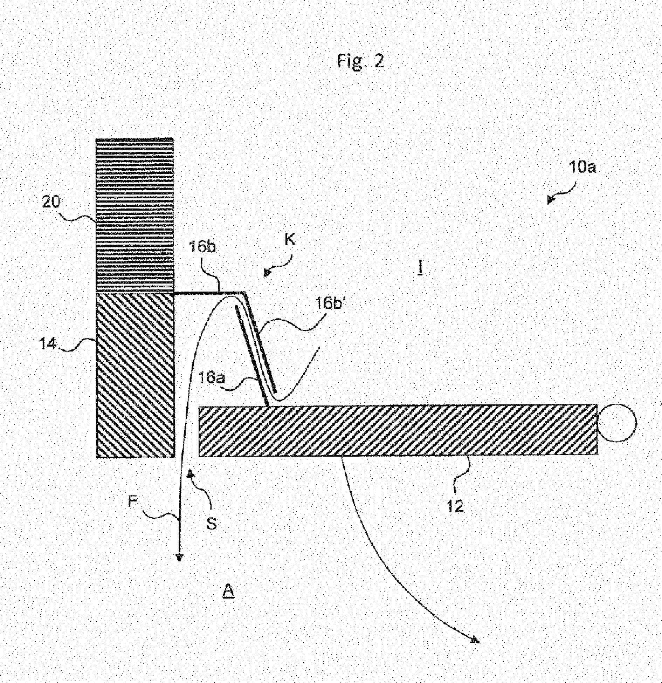

Bei einer weiteren vorteilhaften Ausführungsform ist vorgesehen, dass das erste Abdichtelement 16a und/oder wenigstens ein Schenkel 16b' des zweiten Abdichtelements 16b mindestens abschnittsweise einen Winkel kleiner 90° mit der virtuellen Ebene des Rahmens bzw. des Türblatts 12 in Schließlage einschließt, so dass konstruktiven Besonderheiten der Tür 10 Rechnung getragen und der Strömungskanal K ggf. noch weiter verlängert werden kann. Eine entsprechende Konfiguration 10a ist beispielhaft in Figur 2 angegeben.

Bei beiden Konfigurationen 10 (Fig. 1), 10a (Fig. 2) ist durch die Abdichtelemente 16a, 16b vorteilhaft ein Strömungskanal K definiert, den eine z.B. aus dem Innenraum I stammende Fluidströmung F passieren muss, um in den Außenraum A zu gelangen.

Generell können die Abdichtelemente 16a, 16b entlang ihrer Längsachse (senkrecht zur Zeichenebene der Figuren 1, 2) abschnittsweise oder auch kontinuierlich unterschiedliche Formen aufweisen, so dass entlang einer abzudichtenden Kante des Türblatts 12 unterschiedliche Geometrien der Abdichtelemente 16a, 16b erzielbar sind. Beispielsweise kann in einem ersten, dem Rahmen 14 zugewandten Kantenabschnitt des Türblatts 12, eine Ausbildung der Abdichtelemente 16a, 16b gemäß Figur 1 vorgesehen sein, während in einem zweiten, ebenfalls dem Rahmen 14 zugewandten Kantenabschnitt des Türblatts 12, eine Ausbildung der Abdichtelemente 16a, 16b gemäß Figur 2 vorgesehen ist. Andere Kombination sowie kontinuierliche Übergänge zwischen einzelnen Formgebungen sind ebenfalls möglich, sofern Sie die Betätigung der Tür 10, 10a nicht beeinträchtigen.

Bei einer weiteren vorteilhaften Ausführungsform ist vorgesehen, dass die Abdichtelemente 16a, 16b so relativ zueinander angeordnet sind, dass sie in der Schließlage der Tür 10 (Fig. 1) zumindest teilweise einander überlappen, beispielsweise mit jeweils flächig ausgebildeten Bereichen 16a, 16b' wie z.B. den Schenkeln 16b' im Falle eines L-/Winkel-Profils 16b.

Bei einer weiteren vorteilhaften Ausführungsform ist vorgesehen, dass mindestens eines der Abdichtelemente 16a, 16b mittels Schweißen und/oder Nieten, insbesondere Blindnieten, mit dem Türblatt 12 oder dem Rahmen 14 verbunden ist, wodurch auch eine einfache Nachrüstung der Abdichtelemente 16a, 16b ermöglicht ist.

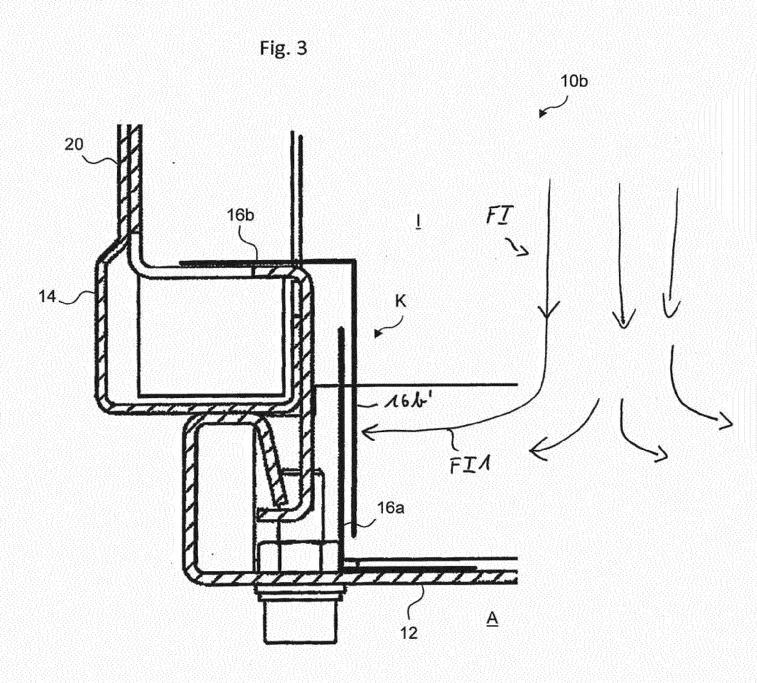

Figur 3 zeigt eine weitere Ausführungsform 10b der Tür in einem teilweisen Querschnitt. Funktional gleichen Teilen sind jeweils entsprechende Bezugszeichen der vorstehend beschriebenen Figuren 1, 2 zugeordnet. Vorliegend ist die Tür 10b beispielsweise als Steck- bzw. Hebetür ausgebildet, wobei das Türblatt 12 nicht drehbar an dem Rahmen 14 angebracht ist, sondern für einen Schließvorgang vielmehr zunächst in gemäß Fig. 3 senkrechter Richtung in den Rahmen 14 einsteckbar ist. Anschließend kann das Türblatt 12 durch eine Relativbewegung zu dem Rahmen 14 in Fig. 3 senkrecht zu der Zeichenebene in an sich bekannter Weise an dem Rahmen 14 arretiert werden. Ein Öffnungsvorgang erfolgt in umgekehrter Reihenfolge.

Zum Zwecke der Arretierung können in an sich bekannter Weise Verriegelungselemente an dem Türblatt 12 und an dem Rahmen 14 angeordnet sein. Im vorliegenden Ausführungsbeispiel der Fig. 3 ist das Türblatt 12 und der Rahmen 14 beispielsweise jeweils mit einander zugeordneten, mäanderförmigen Stegen versehen, wie dies in der DE 44 37 164 A1 beschrieben und eingangs erläutert ist. Gemäß der Fig. 3 befinden sich diese Stege, also die Verriegelungselemente, jeweils am Rand des Türblatts und des Türrahmens.

Wie aus der Fig. 3 hervorgeht, befinden sich die Abdichtelemente 16a, 16b im Hinblick auf die Verriegelungselemente weiter in Richtung zum Innenraum I der gezeigten Ausführungsform 10b hin. Die Abdichtelemente 16a, 16b sind somit gemäß der Fig. 3 auf der Innenseite der Verriegelungselemente angeordnet.

Wie bereits vorstehend für die Drehtüren 10, 10a beschrieben, wird durch die Abdichtelemente 16a, 16b auch bei der Steck- bzw. Hebetür 10b ein Strömungskanal für die Fluidströmung F (Fig. 1) definiert.

Gemäß der Fig. 3 ist dieser Strömungskanal K hinsichtlich einer bei einer Druckerhöhung im Innenraum I entstehenden Fluidströmung den Verriegelungselementen vorgelagert. Eine bei einer Druckerhöhung im Innenraum I entstehende Fluidströmung muss also zuerst die Abdichtelemente 16a, 16b passieren bzw. den Strömungskanal K durchströmen und erreicht erst danach die Verriegelungselemente.

Durch die Abdichtelemente 16a, 16b bzw. den damit gebildeten Strömungskanal K kann somit eine bei einer Druckerhöhung im Innenraum I der Ausführungsform 10b der Fig. 3 entstehende Fluidströmung "abgeschwächt" werden. Dies bedeutet, dass insbesondere die Strömungsgeschwindigkeit der Fluidströmung aufgrund des Strömungskanals K vermindert werden kann. Dies ist gleichbedeutend damit, dass die Fluidströmung zeitverzögert bei den Verriegelungselementen ankommt.

Insoweit werden die Verriegelungselemente mit Hilfe der Abdichtelemente 16a, 16b quasi abgedeckt und damit geschützt.

Die Beeinflussung der Fluidströmung kann dabei durch die Überlappung der Abdichtelemente 16a, 16b eingestellt werden. Insbesondere kann damit quasi auch die Zeitverzögerung eingestellt werden, mit der die Fluidströmung bei den Verriegelungselementen ankommt.

Besonders vorteilhaft kann der Strömungsweg, der durch die Abdichtelemente 16a, 16b definiert wird, so ausgelegt werden, dass sich seine Geometrie, insbesondere Spaltbreite, unter Druckbeaufschlagung verändert, insbesondere verringert. Dadurch wird vorteilhaft eine gesteigerte Dichtwirkung mit dynamischem Ansprechverhalten bereitgestellt. Sofern beispielsweise zumindest ein Teil FI1 der in dem Inneren I auftretenden Fluidströmung FI, der mit einer z.B. im Lichtbogenfall auftretenden Druckerhöhung im Innenraum I einhergeht, auf das Abdichtelement 16b wirkt, wird sein dem Abdichtelement 16a zugewandter und diesen überlappender Schenkel 16b' in Richtung des gegenüberliegenden Schenkels des Abdichtelements 16a gedrückt, wodurch sich die Öffnungsbreite des Strömungskanals K entsprechend verringert, was vorteilhaft zu einer weiteren Abdichtung des Innenraums I gegenüber dem Außenraum A führt.

Die z.B. druck- und/oder strömungsabhängig veränderbare Geometrie des Strömungskanals K kann vorteilhaft durch geeignete Auswahl des Materials bzw. der Materialstärke und/oder Geometrie für die Elemente 16a, 16b hergestellt bzw. beeinflusst werden.

Die Abdichtelemente 16a, 16b erzeugen somit bei der Ausführungsform 10b der Fig. 3 eine zusätzliche Abdichtung, die unabhängig davon ist, ob bzw. in welchem Umfang durch die Verriegelungselemente eine Abdichtung erreicht wird. Durch die Anordnung der Abdichtelemente 16a, 16b auf der Innenseite der Verriegelungselemente liegt diese zusätzliche Abdichtung in Strömungsrichtung vor den Verriegelungselementen.

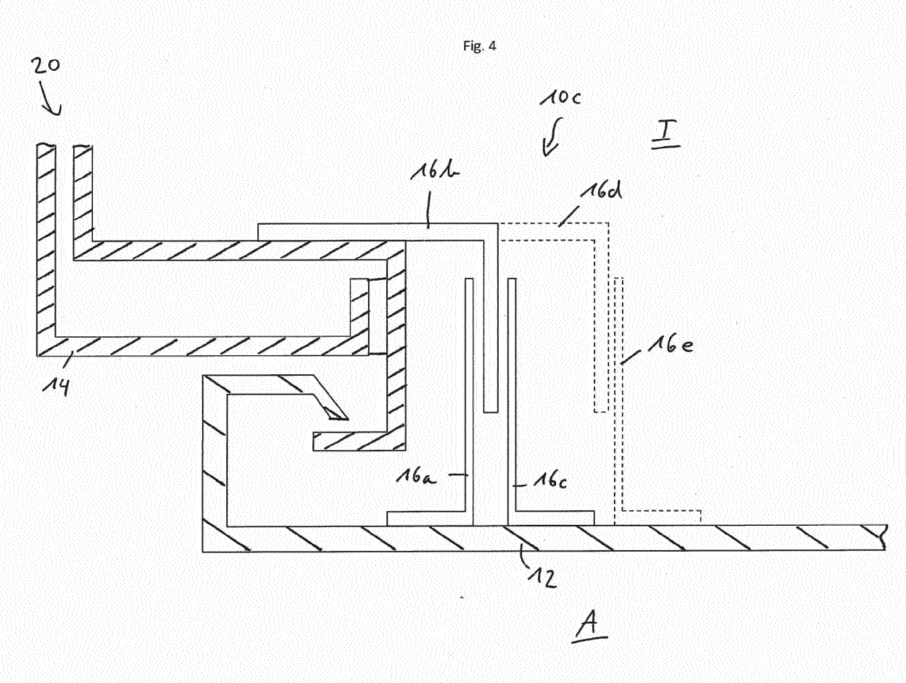

Figur 4 zeigt eine weitere Ausführungsform 10c der Tür in einem teilweisen Querschnitt. Vorliegend ist die Tür 10c beispielsweise als Steck- bzw. Hebetür ausgebildet. Im Unterschied zu der Ausführungsform 10b gemäß Figur 3 weist die Tür 10c gemäß Figur 4 insgesamt drei zusammenwirkende Abdichtelemente 16a, 16b, 16c auf, wodurch sich die Länge des Strömungskanals K (Fig. 1) weiter vergrößert.

Optional können ein oder mehrere Abdichtelemente 16a, 16b, 16c zusätzlich so ausgelegt sein, dass sie sich unter Druckbeaufschlagung wie vorstehend unter Bezugnahme auf Fig. 3 beschrieben verformen, um den Strömungswiderstand des Strömungskanals in dynamischen Betriebsfällen weiter zu erhöhen.

Mehr als drei miteinander zusammenwirkende Abdichtelemente sind ebenfalls denkbar, vgl. die zusätzlichen Elemente 16d, 16e, die in Figur 4 durch gestrichelte Linien angedeutet sind. Die Abdichtelemente 16a, .., 16e können insbesondere an Drehtüren und/oder Steck-/Hebetüren einfach angeordnet oder sogar nachgerüstet werden.

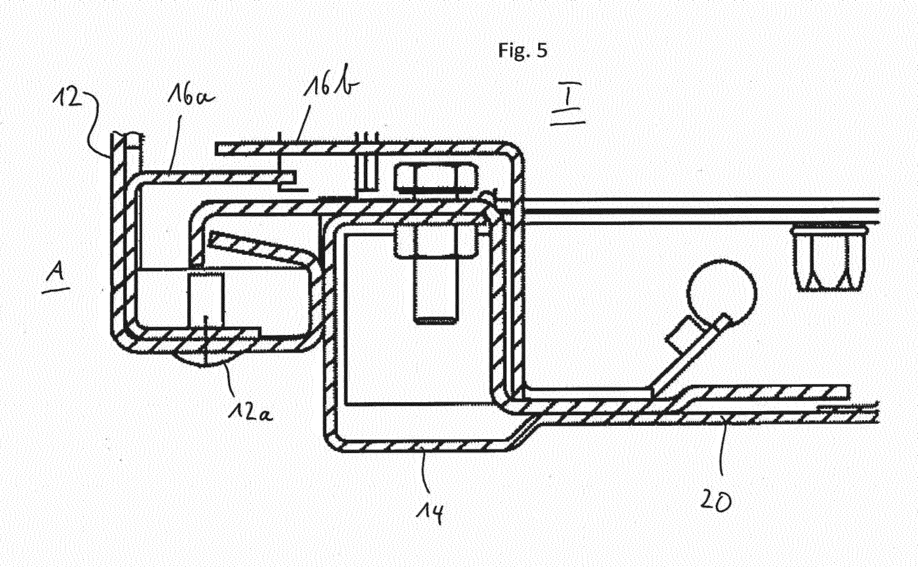

Figur 5 zeigt eine Detailansicht einer Tür, beispielsweise Hebetür, gemäß einer weiteren Ausführungsform in einem teilweisen Querschnitt. Bei dieser Ausführungsform weist ein erstes Abdichtelement 16a einen im wesentlichen U-förmigen Querschnitt auf. Es wirkt zusammen mit einem zweiten Abdichtelement 16b, das einen im wesentlichen L-förmigen Querschnitt aufweist. Das erste Abdichtelement 16a ist über eine Niete 12a an dem Türblatt 12 befestigt.

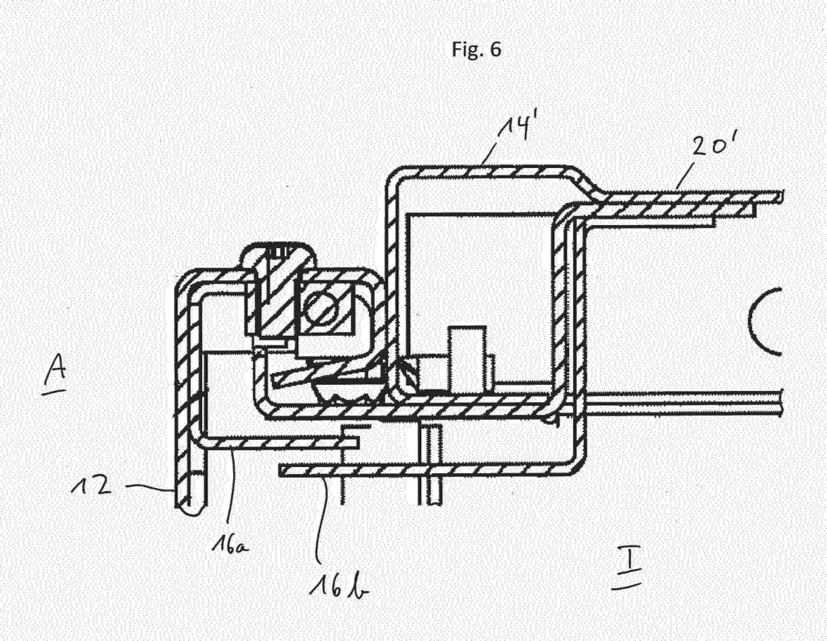

Figur 6 zeigt eine weitere Detailansicht der Tür aus Figur 5, wobei ein dem Rahmen 14 aus Figur 5 z.B. gegenüberliegender Rahmenbereich 14' und entsprechend ein der Seitenwand 20 gegenüberliegender Seitenwandbereich 20' abgebildet ist. In dem Rahmenbereich 14' ist an dem Türblatt 12 ein erstes Abdichtelement 16a und direkt an dem Rahmenbereich 14' ein zweites Abdichtelement 16b angeordnet.

Ein weiterer Aspekt ist ein Verfahren zur Herstellung einer Tür 10, insbesondere für einen Schaltschrank einer Mittelspannungs-Schaltanlage, wobei zunächst eine Tür 10 mit einem Türblatt 12 und einem Rahmen 14 bereitgestellt wird.

Vorzugsweise wird an dem Türblatt 12 mindestens ein erstes, im wesentlichen flächig ausgebildetes, Abdichtelement 16a vorgesehen, das sich zumindest teilweise aus einer durch das Türblatt 12 definierten virtuellen Ebene heraus erstreckt, und an dem Rahmen 14 wird mindestens ein zweites, im wesentlichen flächig ausgebildetes, Abdichtelement 16b vorgesehen, das so an dem Rahmen 14 angeordnet ist, dass es dann, wenn das Türblatt 12 sich in einer Schließlage gegenüber dem Rahmen 14 befindet, mit dem ersten Abdichtelement 16a zusammenwirkt, um den Strömungskanal K für eine Fluidströmung F im Bereich des Spalts S zwischen dem Türblatt 12 und dem Rahmen 14 zu bilden. Gemäß einer bevorzugten Ausführungsform wird mindestens eines der Abdichtelemente 16a, 16b mittels Schweißen und/oder Nieten, insbesondere Blindnieten, mit dem Türblatt 12 oder dem Rahmen 14 verbunden.

Die Tür 10 kann nicht nur bei Schaltanlagen, sondern auch bei anderen Zielsystemen eingesetzt werden. Besonders vorteilhaft ist die verhältnismäßig gute Dichtwirkung, insbesondere auch in dynamischen Betriebszuständen (aufgrund einer möglichen Verformung und damit Verengung des Strömungskanals K), bei gleichzeitig wenig komplexem Aufbau und hoher Betriebssicherheit.

## Patentansprüche

1. Schaltschrank, insbesondere für eine Mittelspannungs-Schaltanlage, mit mindestens einer Tür (10), wobei die Tür (10) ein Türblatt (12) und einen Rahmen (14) aufweist, wobei das Türblatt (12) in einer Schließlage mit Hilfe von Verriegelungselementen an dem Rahmen (14) arretiert ist, und wobei die Verriegelungselemente mäanderförmige Stege aufweisen, die sich am Rand des Türblatts (12) und des Rahmens (14) befinden, **dadurch gekennzeichnet, dass** an dem Türblatt (12) und an dem Rahmen (14) mindestens zwei Abdichtelemente (16a, 16b) vorgesehen sind, und dass die beiden Abdichtelemente (16a, 16b) auf der Innenseite der mäanderförmigen Stege der Verriegelungselemente angeordnet sind.

2. Schaltschrank nach Anspruch 1, wobei die beiden Abdichtelemente (16a, 16b) im wesentlichen flächig ausgebildet sind und die mäanderförmigen Stege der Verriegelungselemente abdecken.

3. Schaltschrank nach einem der vorstehenden Ansprüche, wobei die beiden Abdichtelemente (16a, 16b) in der Schließlage zumindest teilweise einander überlappen.

4. Schaltschrank nach einem der vorstehenden Ansprüche, wobei die beiden Abdichtelemente (16a, 16b) derart zusammenwirken, dass sie einen Strömungskanal (K) für eine Fluidströmung (F) zwischen dem Türblatt (12) und dem Rahmen (14) bilden.

5. Schaltschrank nach Anspruch 4, wobei der Strömungskanal (K) durch die Abdichtelemente (16a, 16b) derart ausgelegt ist, dass sich seine Spaltbreite unter einer Druckbeaufschlagung im Innenraum (I) des Schaltschranks verringert.

6. Schaltschrank nach einem der vorstehenden Ansprüche, wobei das erste und/oder zweite Abdichtelement (16a, 16b) im wesentlichen als Rechteck- oder Winkelprofil ausgebildet sind.

7. Schaltschrank nach einem der vorstehenden Ansprüche, wobei das erste Abdichtelement (16a) und/oder wenigstens ein Schenkel (16b') des zweiten Abdichtelements (16b) mindestens abschnittsweise etwa einen rechten Winkel mit der von dem Türblatt (12) definierten virtuellen Ebene einschließt.

8. Schaltschrank nach einem der vorstehenden Ansprüche, wobei das erste Abdichtelement (16a) und/oder wenigstens ein Schenkel (16b') des zweiten Abdichtelements (16b) mindestens abschnittsweise einen Winkel kleiner 90 ° mit der von dem Türblatt (12) definierten virtuellen Ebene einschließt.

9. Schaltschrank nach einem der vorstehenden Ansprüche, wobei mindestens eines der Abdichtelemente (16a, 16b) mittels Schweißen und/oder Nieten, insbesondere Blindnieten, mit dem Türblatt (12) oder dem Rahmen (14) verbunden ist.

10. Schaltschrank nach einem der vorstehenden Ansprüche, wobei die Tür (10; 10a; 10b) als Hebetür (10b) oder als Drehtür (10; 10a) ausgebildet ist.

## Claims

1. Electrical cabinet, in particular for medium voltage switchgear, with at least one door (10), said door (10) comprising a door panel (12) and a frame (14), wherein in a closed position the door panel (12) is locked to the frame (14) with the aid of locking elements, and wherein the locking elements have meander-formed webs which are located at the edge of the door panel (12) and of the frame (14), **characterised in that** at least two sealing elements (16a, 16b) are provided on the door panel (12) and on the frame (14), and that the two sealing elements (16a, 16b) are arranged on the inner side of the meander-formed webs of the locking elements.

2. Electrical cabinet according to claim 1, wherein the two sealing elements (16a, 16b) are essentially planar in form and cover the meander-formed webs of the locking elements.

3. Electrical cabinet according to one of the preceding claims, wherein the two sealing elements (16a, 16b) at least partially overlap one another in the closed position.

4. Electrical cabinet according to one of the preceding claims, wherein the two sealing elements (16a, 16b) interact such that they form a flow channel (K) for a fluid flow (F) between the door panel (12) and the frame (14).

5. Electrical cabinet according to claim 4, wherein the flow channel (K) is formed through the sealing elements (16a, 16b) such that its gap width is reduced under the application of pressure within the interior (I) of the electrical cabinet.

6. Electrical cabinet according to one of the preceding claims, wherein the first and/or second sealing element (16a, 16b) is substantially designed in the form of a rectangular or angle profile.

7. Electrical cabinet according to one of the preceding claims, wherein the first sealing element (16a) and/or at least one arm (16b') of the second sealing element (16b), at least in sections, enclose approximately a right angle with the virtual plane defined by the door panel (12).

8. Electrical cabinet according to one of the preceding claims, wherein the first sealing element (16a) and/or at least one arm (16b') of the second sealing element (16b), at least in sections, enclose an angle of less than 90° with the virtual plane defined by the door panel (12).

9. Electrical cabinet according to one of the preceding claims, wherein at least one of the sealing elements (16a, 16b) is connected with the door panel (12) or the frame (14) by means of welding and/or riveting, in particular blind riveting.

10. Electrical cabinet according to one of the preceding claims, wherein the door (10; 10a; 10b) is designed as a lifting door (10b) or as a rotating door (10; 10a).

## Revendications

1. Armoire de distribution électrique, en particulier pour une installation de distribution électrique moyenne tension, avec au moins une porte (10), dans laquelle la porte (10) comprend un vantail de porte (12) et un cadre (14), dans laquelle le vantail de porte (12) est arrêté dans une position de fermeture sur le cadre (14) au moyen d'éléments de verrouillage, et dans laquelle les éléments de verrouillage présentent des arêtes sinueuses qui se trouvent sur le bord du vantail de porte (12) et du cadre (14), **caractérisée en ce qu'**au moins deux éléments d'étanchéité (16a, 16b) sont prévus, sur le vantail de porte (12) et sur le cadre (14), et **en ce que** les deux éléments d'étanchéité (16a, 16b) sont disposés sur le côté intérieur des arêtes sinueuses des éléments de verrouillage.

2. Armoire de distribution électrique selon la revendication 1, dans laquelle les deux éléments d'étanchéité (16a, 16b) sont formés essentiellement plats et recouvrent les arêtes sinueuses des éléments de verrouillage.

3. Armoire de distribution électrique selon l'une quelconque des revendications précédentes, dans laquelle les deux éléments d'étanchéité (16a, 16b) se chevauchent au moins partiellement dans la position de fermeture.

4. Armoire de distribution électrique selon l'une quelconque des revendications précédentes, dans laquelle les deux éléments d'étanchéité (16a, 16b) coopèrent de telle sorte qu'ils forment un canal d'écoulement (K) pour un écoulement de fluide (F) entre le vantail de porte (12) et le cadre (14).

5. Armoire de distribution électrique selon la revendication 4, dans laquelle le canal d'écoulement (K) entre les éléments d'étanchéité (16a, 16b) est conçu de telle sorte que sa largeur de fente diminue par une mise sous pression de l'espace intérieur (I) de l'armoire de distribution électrique.

6. Armoire de distribution électrique selon l'une quelconque des revendications précédentes, dans laquelle le premier et/ou second élément d'étanchéité (16a, 16b) sont formés essentiellement sous la forme d'un profilé rectangulaire ou angulaire.

7. Armoire de distribution électrique selon l'une quelconque des revendications précédentes, dans laquelle le premier élément d'étanchéité (16a) et/ou au moins une branche (16b') du second élément d'étanchéité (16b) renferme(nt) au moins par endroit un angle environ perpendiculaire avec un plan virtuel défini par le vantail de porte (12).

8. Armoire de distribution électrique selon l'une quelconque des revendications précédentes, dans laquelle le premier élément d'étanchéité (16a) et/ou au moins une branche (16b') du second élément d'étanchéité (16b) renferme au moins par endroit un angle inférieur à 90° avec le plan virtuel défini par le vantail de porte (12).

9. Armoire de distribution électrique selon l'une quelconque des revendications précédentes, dans laquelle au moins un des éléments d'étanchéité (16a, 16b) est relié par soudure et/ou par rivets, en particulier de rivets aveugles, au vantail de porte (12) ou au cadre (14).

10. Armoire de distribution électrique selon l'une quelconque des revendications précédentes, dans laquelle la porte (10 ; 10a ; 10b) est formée sous la forme d'une porte de levage (10b) ou d'une porte pivotante (10 ; 10a).
